# EUROPÄISCHE PATENTANMELDUNG

(11) **EP 2 712 789 A2**
(43) Veröffentlichungstag der Anmeldung: **02.04.2014**
(21) Anmeldenummer: 13003605.6
(22) Anmeldetag: 17.07.2013
(51) Int. Cl.: B62D 21/20, B62D 21/04, B60P 3/22

(54) **Anhänger zur Beförderung von Flüssigkeiten**

(30) Priorität: 28.09.2012 DE 102012019200
(71) Anmelder: Röhren- Und Pumpenwerk Bauer GmbH, 8570 Voitsberg (AT)
(72) Erfinder: Roiss, DI Otto, 8010 Graz (AT)
(74) Vertreter: Hoefer & Partner

(57) **Zusammenfassung**

Die vorliegende Erfindung bezieht sich auf einen Anhänger (1) zur Beförderung von Flüssigkeiten, umfassend ein Chassis (2), eine mit dem Chassis (2) verbundene Deichsel (4), und einen vom Chassis (2) getragenen Tank (3) zur Aufnahme der Flüssigkeit, wobei das Chassis (2) lediglich einen Längsträger (9) aufweist, wobei der Längsträger (9) mittig angeordnet ist.

## Beschreibung

Vorliegende Erfindung betrifft einen Anhänger zur Beförderung von Flüssigkeiten gemäß dem Oberbegriff des Anspruchs 1. Der Anhänger wird insbesondere zum Befördern und Ausbringen von Wirtschaftsdünger und Klärschlamm verwendet.

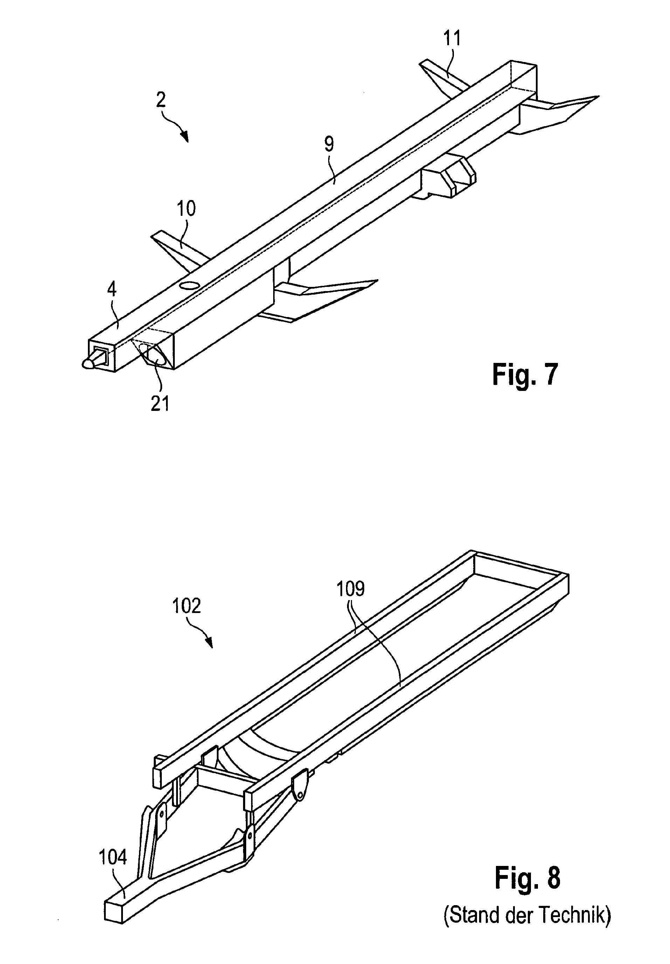

Fig. 8 zeigt ein Chassis 102 nach dem Stand der Technik für einen Anhänger zur Beförderung von Flüssigkeiten. Auf das dargestellte Chassis 102 wird ein Tank zur Aufnahme der Flüssigkeit aufgesetzt. An der Unterseite des Chassis 102 wird zumindest ein Achsaggregat mit Rädern befestigt. Über eine Deichsel 104 kann der Anhänger gezogen werden. Das Chassis 102 nach dem Stand der Technik weist zwei parallele Längsträger 109 auf. Die parallelen Längsträger 109 erstrecken sich bezüglich der Fahrtrichtung in Längsrichtung. Die Längsträger 109 sind voneinander beabstandet. Insbesondere beim Transport großer Mengen an Flüssigkeit muss aufgrund des großen Gewichtes die Torsion des Anhängers um die Längsachse berücksichtigt werden. Die vorbekannte Anordnung ist dabei hinsichtlich der Gewichtsoptimierung auf der einen Seite und der ausreichenden Steifigkeit auf der anderen Seite nicht optimal ausgebildet.

Es ist Aufgabe vorliegender Erfindung, einen Anhänger gemäß dem Oberbegriff des Anspruchs 1 anzugeben, der bei kostengünstiger Herstellung und Montage gewichtsoptimiert ausgestaltet ist und eine große Menge an Flüssigkeit transportieren kann.

Die Lösung dieser Aufgabe erfolgt durch die Merkmale des Anspruchs 1. Die Unteransprüche haben bevorzugte Weiterbildungen der Erfindung zum Gegenstand.

Somit wird die Aufgabe gelöst durch einen Anhänger zur Beförderung von Flüssigkeiten, insbesondere von Wirtschaftsdünger oder Klärschlamm. Der Anhänger umfasst ein Chassis (auch: Rahmen), eine mit dem Chassis verbundene Deichsel und einen durch das Chassis getragenen Tank zur Aufnahme der Flüssigkeit. Das Chassis weist erfindungsgemäß lediglich einen Längsträger auf. Dieser eine Längsträger ist mittig angeordnet. Der Längsträger erstreckt sich bezüglich der Fahrtrichtung in Längsrichtung. Insbesondere ist die Mitte im Chassis so definiert, dass der Längsträger mit dem Anbindungspunkt an der Zugmaschine fluchtet. Erfindungsgemäß wurde erkannt, dass für eine leichte und gleichzeitig betriebssichere Bauweise des Chassis nicht zwangsläufig die gesamte Rahmenkonstruktion versteift ausgebildet werden muss. Erfindungsgemäß kann der einzelne, mittig angeordnete Längsträger die auftretenden Torsionskräfte optimal aufnehmen. Der einzelne Längsträger erlaubt nämlich eine Torsion um die Längsachse, wohingegen bei herkömmlichen Anordnungen bei solch einer Torsion eine zu hohe Bauteilbelastung aufgrund der zwei parallelen, steif verbundene Längsträger auftreten kann.

Bezeichnungen, wie "vorne" und "hinten" im Rahmen dieser Anmeldung, beziehen sich jeweils auf die Fahrtrichtung des Anhängers. Durch die Deichsel ist die vordere Seite des Anhängers definiert.

Bevorzugt ist vorgesehen, dass beidseitig des Längsträgers Querträger abstehen. Die Querträger stehen im Wesentlichen senkrecht zum Längsträger. Auf diesen Querträgern liegt der Tank auf. Erfindungsgemäß verbinden die Querträger nicht, wie beispielsweise in vorbekannten Anordnungen, zwei parallele Längsträger, sondern die Querträger stehen vom Längsträger ab, so dass die äußeren Enden der Querträger frei stehen. Insbesondere sind ein vorderer und ein hinterer Querträger vorgesehen, wobei jeder Querträger an seiner Mitte mit dem Längsträger verbunden ist.

An dem Längsträger wird zumindest ein Achsaggregat angebunden. An diesem Achsaggregat sind mehrere, insbesondere vier, Reifen befestigt.

Der Tank ist vorzugsweise so ausgebildet, dass er den Längsträger an drei Seiten umschließt. Dies wird dadurch erreicht, dass im Tank an der Unterseite ein sich in Längsrichtung erstreckender nach unten hin offener Kanal ausgebildet ist. In diesem Kanal des Tanks wird der Längsträger eingesetzt. Durch die Ausbildung dieses unten offenen Kanals im Tank entstehen beidseitig des Längsträgers seitliche Kammern, in denen Flüssigkeit aufgenommen werden kann. Der Innenraum des Tanks ist insbesondere ein durchgehender Hohlraum, so dass diese seitlichen Kammern Bestandteil des gesamten Innenraums des Tanks sind. Der Vorteil des Kanals im Tank und der seitlichen Kammern ist, dass möglichst viel Raum im Tank zur Aufnahme der Flüssigkeit bereitsteht.

Bei der Ausgestaltung des Tanks mit den soeben beschriebenen seitlichen Kammern muss allerdings berücksichtigt werden, dass es beidseitig des Längsträgers jeweils einen tiefsten Punkt im Tank gibt. Dementsprechend müssen auch die Leitungen, die in den Tank hineinführen, beidseitig des Längsträgers angeordnet werden, so dass die Leitungen nach Möglichkeit zu den tiefsten Punkten im Tank führen. Dementsprechend ist bevorzugt vorgesehen, dass an der Vorderseite und/oder an der Rückseite des Tanks jeweils beidseitig des Kanals bzw. beidseitig des Längsträgers je eine Leitung in den Tank führt.

Der Längsträger ist bevorzugt rohrförmig ausgestaltet. Dies bedeutet, dass der Längsträger mit einem runden oder eckigen Querschnitt innen hohl ist. Durch diese Ausgestaltung ist es möglich, dass im Längsträger eine Längsleitung für die Flüssigkeit angeordnet wird. Diese Längsleitung erstreckt sich bevorzugt über zumindest 50%, vorzugsweise zumindest 75%, der Länge des Tanks. Die Länge des Tanks wird dabei in Längsrichtung (entspricht der Fahrtrichtung) gemessen. Über die Längsleitung kann die Flüssigkeit beispielsweise von einer vor dem Tank angeordneten Pumpe zur Rückseite des Tanks transportiert werden. Dabei ist die Längsleitung sehr platzsparend und geschützt im Inneren des Längsträgers aufgenommen.

Des Weiteren kann durch die rohrförmige Ausbildung des Längsträgers zumindest eine Pumpe im Inneren des Längsträgers angeordnet werden. Mittels dieser Pumpe wird die Flüssigkeit in den Tank befördert oder aus dem Tank herausbefördert.

An der Pumpe ist bevorzugt eine Anschlussleitung angeordnet, über die die Flüssigkeit angesaugt werden kann. Diese Anschlussleitung verläuft bevorzugt seitlich durch den Längsträger hindurch zur Pumpe.

Der Hohlraum im Inneren des Längsträgers muss entsprechend groß sein, um eine oder zwei Pumpen aufzunehmen. Dementsprechend wird der Längsträger bevorzugt so ausgebildet, dass er im Bereich der zumindest einen Pumpe seinen größten Querschnitt aufweist.

Der Tank besteht vorzugsweise, insbesondere vollständig, aus Kunststoff. Der Längsträger besteht bevorzugt aus Metall.

Für die Ausbildung der Deichsel und somit für die Verbindung des Anhängers mit einer Zugmaschine sind bevorzugt zwei Varianten vorgesehen: In der ersten Variante, der sogenannten "Obenanhängung", ist die Deichsel eine Verlängerung des Längsträgers. Insbesondere ist dabei die Deichsel integraler Bestandteil des Längsträgers.

In der zweiten Variante, der sog. "Untenanhängung" teilt sich die Deichsel in zwei Deichselarme auf. Jeder der Deichselarme ist dabei mit dem vorderen Querträger verbunden.

Im Folgenden wird die Erfindung anhand der begleitenden Zeichnung im Detail beschrieben. Dabei zeigen:
- Fig. 1 bis 3: drei unterschiedliche Ansichten eines erfindungsgemäßen Anhängers gemäß einem ersten Ausführungsbeispiel,
- Fig. 4: ein Chassis mit Deichsel des erfindungsgemäßen Anhängers gemäß dem ersten Ausführungsbeispiel,
- Fig. 5: den erfindungsgemäßen Anhänger gemäß einem zweiten Ausführungsbeispiel,
- Fig. 6: den erfindungsgemäßen Anhänger gemäß einem dritten Ausführungsbeispiel,
- Fig. 7: das Chassis mit Deichsel des erfindungsgemäßen Anhängers gemäß dem dritten Ausführungsbeispiel, und
- Fig. 8: ein Chassis für einen Anhänger gemäß dem Stand der Technik.

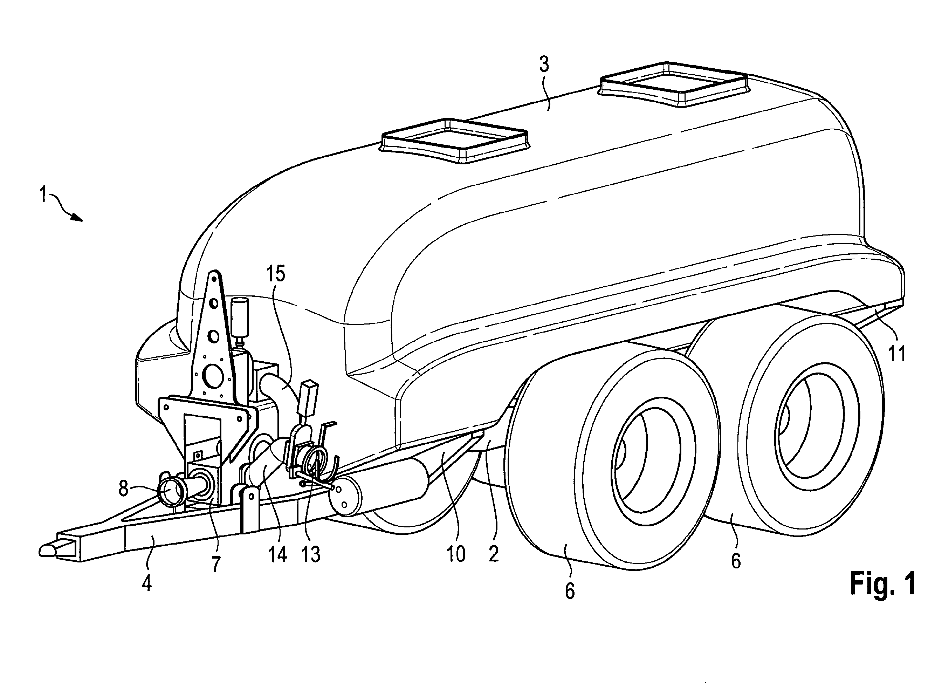

Im Folgenden wird anhand der Fig. 1 bis 4 ein erstes Ausführungsbeispiel des erfindungsgemäßen Anhängers 1 beschrieben. Gleiche bzw. funktionalgleiche Bauteile sind in allen Ausführungsbeispielen mit denselben Bezugszeichen versehen.

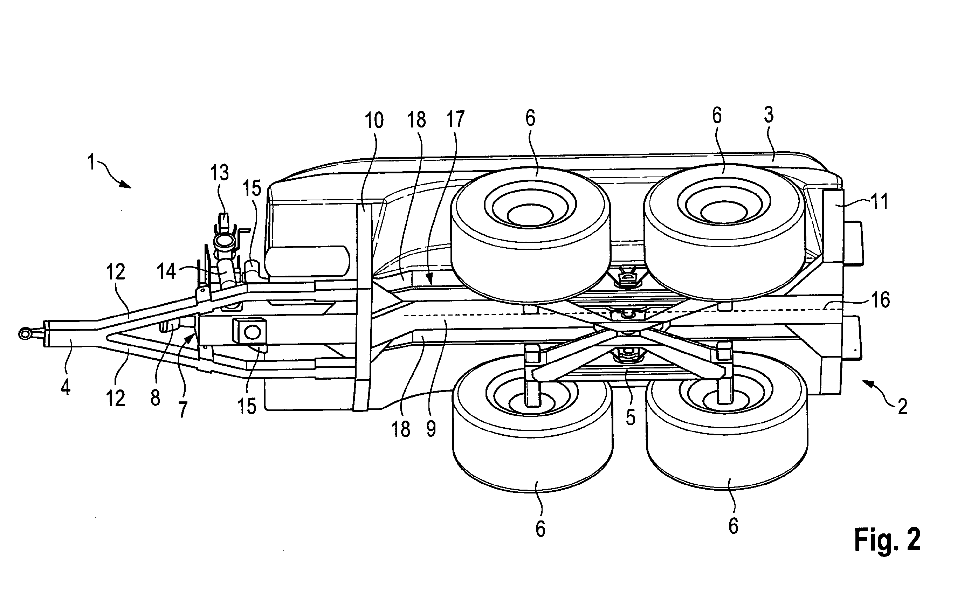

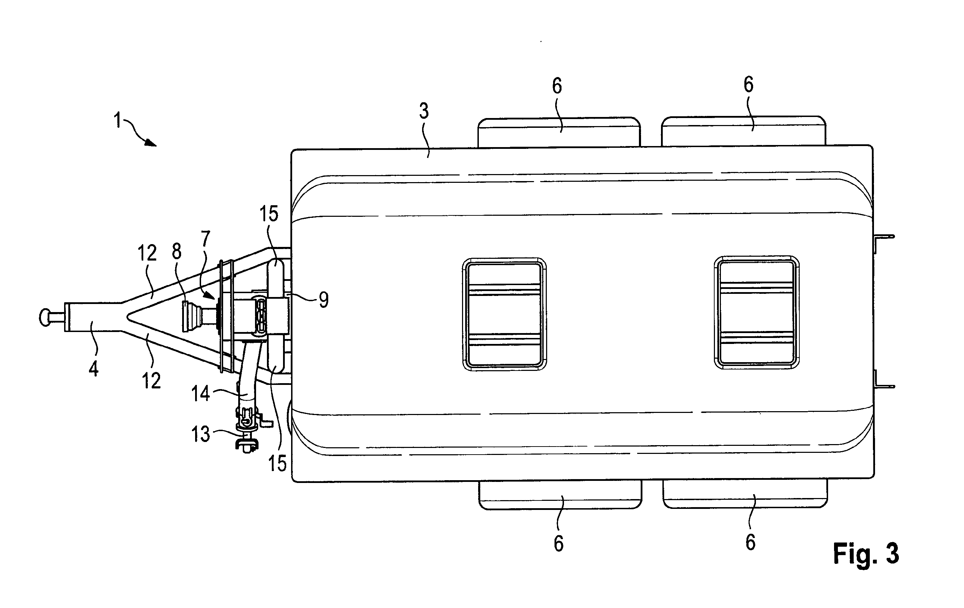

Fig. 1 zeigt eine seitliche Ansicht des Anhängers 1. Fig. 2 zeigt eine Ansicht von unten. Fig. 3 zeigt eine Draufsicht auf den Anhänger 1.

Gemäß den Fig. 1 bis 3 umfasst der Anhänger 1 ein Chassis 2, einen auf das Chassis 2 aufgesetzten Tank 3 und eine Deichsel 4 zum Anbinden des Anhängers 1 an eine Zugmaschine. Am Chassis 2 ist ein Achsaggregat 5 (auch: Achsträger) befestigt. Das Achsaggregat 5 wiederum trägt vier Reifen 6.

Das Chassis 2 weist einen einzelnen Längsträger 9 auf. Der Längsträger 9 erstreckt sich in Fahrtrichtung des Anhängers 1. Am Längsträger 9 ist ein vorderer Querträger 10 und ein hinterer Querträger 11 befestigt. Die beiden Querträger 10, 11 sind jeweils an ihrer Mitte mit dem Längsträger 9 verbunden, so dass die Enden der Querträger 10, 11 seitlich des Längsträgers 9 frei stehen. Auf den Querträgern 10, 11 liegt der Tank 3 auf.

Die ersten beiden Ausführungsbeispiele zeigen die sog. "Untenanhängung". Demgemäß teilt sich die Deichsel 4 in zwei Deichselarme 12 auf. Jeder der Deichselarme 12 ist seitlich des Längsträgers 9 mit dem vorderen Querträger 10 verbunden.

Zum Befüllen und/oder Entleeren des Tanks 3 ist zumindest eine Pumpe 7 vorgesehen. Die Pumpe 7 weist an ihrem vorderen Ende einen Zapfenwellenanschluss 8 auf.

Die Pumpe 7 ist mit einer Anschlussleitung 14 verbunden. An der Anschlussleitung 14 ist ein Anschluss 13 ausgebildet. Über den Anschluss 13 kann ein Saugschlauch zum Ansaugen von Flüssigkeit angeschlossen werden.

Der Tank 3 ist so ausgebildet, dass er den Längsträger 9 an drei Seiten umschließt. Hierzu weist der Tank 3 an seiner Unterseite einen nach unten hin offenen Kanal 17 auf. In diesem Kanal 17 ist der Längsträger 9 eingesetzt. Durch die Ausbildung des Kanals 17 im Tank 3 entstehen beidseitig des Längsträgers 9 seitliche Kammern 18. Diese seitlichen Kammern 18 sind im Inneren des Tanks 3 frei verbunden mit dem restlichen Hohlraum im Tank 3. Allerdings ist zu beachten, dass durch die zwei seitlichen Kammern 18 beidseitig des Längsträgers 9 jeweils ein tiefster Raum im Tank 3 entsteht.

Von der Pumpe 7 führen deshalb zwei parallele Tankleitungen 15 von vorne in den Tank 3. Jeweils eine der Tankleitungen 15 führt in eine der seitlichen Kammern 18. An der Rückseite des Tanks 3 führen zwei parallele Rührleitungen in die seitlichen Kammern 18. Demgemäß gibt es an der Vorderseite zwei Tankleitungen 15 und an der Rückseite zwei Rührleitungen, die in den Tank 3 hineinführen.

Der Längsträger 9 ist innen hohl ausgebildet, so dass im Längsträger 9 eine Längsleitung 16 angeordnet werden kann. Die Längsleitung 16 ist in den Figuren durch eine gestrichelte Linie angedeutet. Die Längsleitung 16 führt annähernd über die gesamte Länge des Tanks 3.

Da der gezeigte Anhänger 1 in erster Linie zum Transport und Ausbringen von Wirtschaftsdünger oder Klärschlamm genutzt wird, sind die Leitungen untereinander wie folgt verbunden: Die beiden Tankleitungen 15 führen von der Pumpe 7 in den Tank 3. Die Längsleitung 16 führt von der Pumpe 7 zum hinteren Ende des Tanks 3. Am hinteren Ende des Tanks 3 ist die Längsleitung verbunden mit den beiden Rührleitungen, die von hinten in den Tank 3 führen. Des Weiteren ist die Längsleitung 16 hinter dem Tank 3 mit einer Ausbringungsvorrichtung verbunden. Über diese Ausbringungsvorrichtung kann der Wirtschaftsdünger oder der Klärschlamm auf das Feld gespritzt werden. Über entsprechende Ventile und/oder Schieber können folgende Funktionen des Anhängers 1 realisiert werden. Die Pumpe 7 saugt über die Anschlussleitung 14 die Flüssigkeit an und fördert sie direkt über die Längsleitung 16 und die hinteren beiden Rührleitungen in den Tank 3. Zum Ausbringen der Flüssigkeit saugt die Pumpe 7 über die Tankleitungen 15 die Flüssigkeit an und fördert sie von der Vorderseite des Tanks 3 über die Längsleitung 16 zur Rückseite. An der Rückseite wird die Flüssigkeit auf das Feld ausgebracht. Zum Rühren der Flüssigkeit im Tank 3 saugt die Pumpe 7 über die Tankleitungen 15 die Flüssigkeit an und fördert sie über die Längsleitung 16 nach hinten. Hinten wird die Flüssigkeit nicht ausgebracht, sondern direkt über die beiden Rührleitungen wieder ins Innere des Tanks 3 befördert.

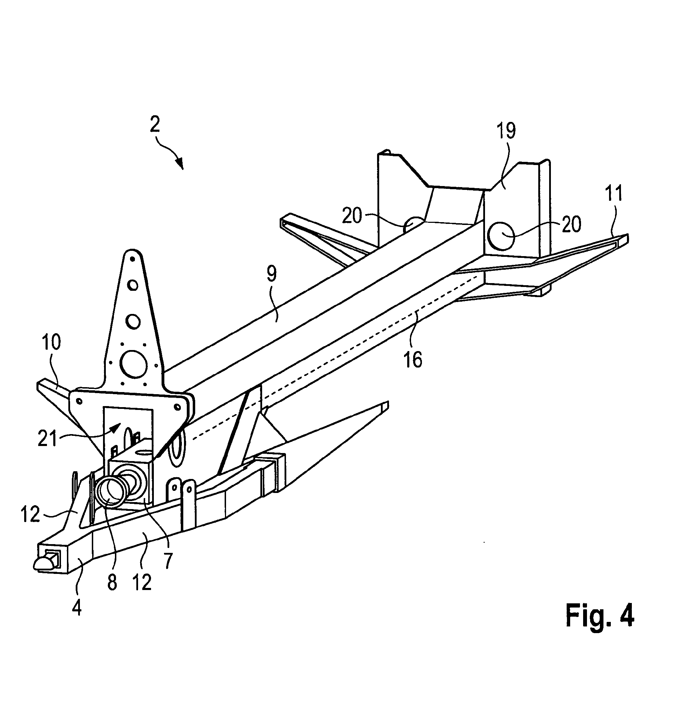

Fig. 4 zeigt im Detail das Chassis 2 mit der Deichsel 4. An dieser Darstellung ist gut zu sehen, dass der innen hohle Längsträger 9 einen Pumpenaufnahmeraum 21 aufweist. In diesem Pumpenaufnahmeraum 21 wird zumindest die eine Pumpe 7 eingesteckt.

Dadurch ist nicht nur die Längsleitung 16, sondern auch die Pumpe 7 platzsparend und sicher im Inneren des Längsträgers 9 aufgenommen. Die in Fig. 4 nicht dargestellte Anschlussleitung 14 verläuft durch einen seitlichen Durchbruch im Längsträger 9 zur Pumpe 7.

Des Weiteren zeigt Fig. 4 eine Rückplatte 19, gegen die die Hinterseite des Tanks 3 abgestützt ist. In dieser Rückplatte 19 sind beidseitig des Längsträgers 9 Durchbrüche 20 ausgebildet. Durch diese Durchbrüche 20 werden die nicht dargestellten Rührleitungen geführt.

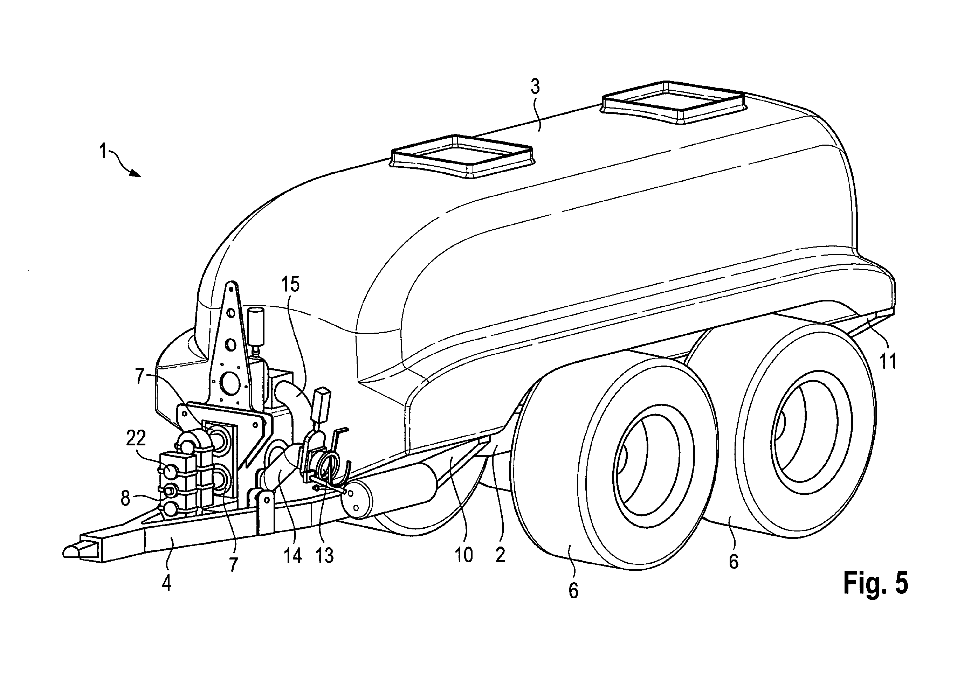

Fig. 5 zeigt ein zweites Ausführungsbeispiels des Anhängers 1. Der einzige Unterschied zwischen dem ersten und zweiten Ausführungsbeispiel ist, dass im zweiten Ausführungsbeispiel zwei Pumpen 7 übereinander angeordnet sind. Die zwei Pumpen 7 werden über ein Getriebe 22 miteinander verbunden. Der Zapfwellenanschluss 8 ist dementsprechend am Getriebe 22 ausgebildet. Wie bereits anhand von Fig. 4 zu sehen ist, reicht der Pumpenaufnahmeraum 21 im Längsträger 9 zur Aufnahme von zwei übereinander angeordneten Pumpen 7 aus.

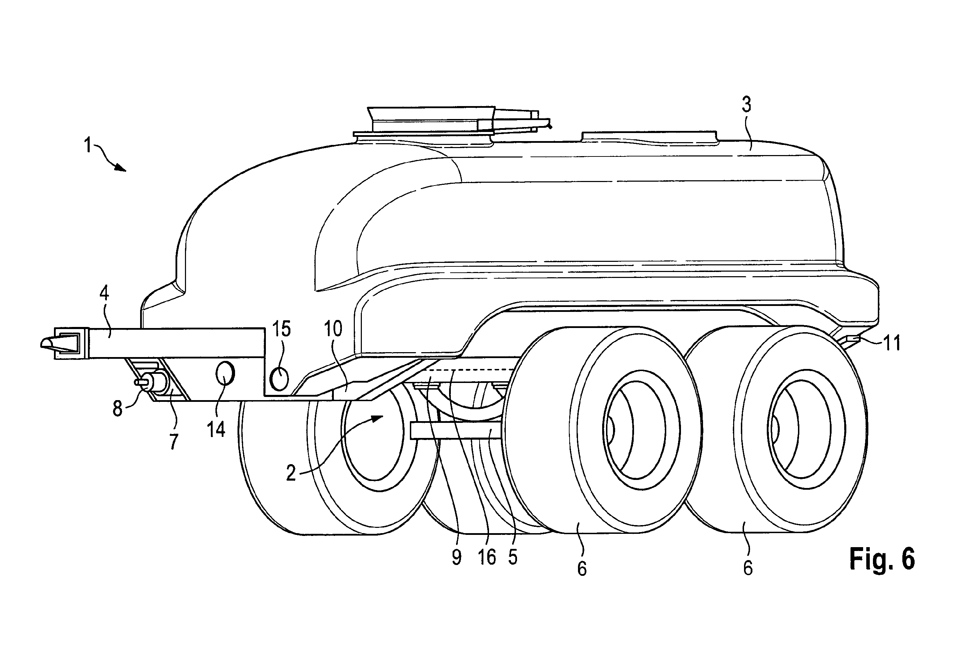

Fig. 6 und 7 zeigen ein drittes Ausführungsbeispiel des Anhängers 1. Im dritten Ausführungsbeispiel ist die sog. "Obenanhängung" gezeigt. Dementsprechend ist hier die Deichsel 4 als eine Verlängerung des Längsträgers 9 ausgebildet. Insbesondere ist hier die Deichsel 4 integraler Bestandteil des Längsträgers 9. In entsprechender Weise befindet sich die Pumpe 7 und der zugehörige Pumpenaufnahmeraum 21 unter der Deichsel 4. Anstatt der Anschlussleitung 14 ist in Fig. 6 lediglich ein seitlicher Durchbruch im Längsträger 9 gezeigt. Des Weiteren sind zur Vereinfachung der Darstellung auch die beiden Tankleitungen 15 ausgeblendet. Entsprechend ist lediglich einer von zwei Durchbrüchen im Tank 3 gezeigt.

Fig. 7 zeigt im Detail das Chassis 2 mit der Deichsel 4 für den Anhänger 1 des dritten Ausführungsbeispiels. Anhand dieser Figur ist zu sehen, dass ein Teil des Längsträgers 9 auch hier als Pumpenaufnahmeraum 21 genutzt wird.

### Bezugszeichenliste

- 1: Anhänger
- 2: Chassis
- 3: Tank
- 4: Deichsel
- 5: Achsaggregat
- 6: Reifen
- 7: Pumpe
- 8: Zapfwellenanschluss
- 9: Längsträger
- 10: vorderer Querträger
- 11: hinterer Querträger
- 12: Deichselarme
- 13: Anschluss
- 14: Anschlussleitung
- 15: zwei Tankleitungen
- 16: Längsleitung
- 17: unten offener Kanal
- 18: seitliche Kammern
- 19: Rückplatte
- 20: zwei Durchbrüche
- 21: Pumpenaufnahmeraum
- 22: Getriebe
- 102: Chassis nach dem Stand der Technik
- 104: Deichsel nach dem Stand der Technik
- 109: zwei parallele Längsträger nach dem Stand der Technik

## Patentansprüche

1. Anhänger (1) zur Beförderung von Flüssigkeiten, umfassend
- ein Chassis (2),
- eine mit dem Chassis (2) verbundene Deichsel (4), und
- einen vom Chassis (2) getragenen Tank (3) zur Aufnahme der Flüssigkeit,
**dadurch gekennzeichnet, dass**
- das Chassis (2) lediglich einen Längsträger (9) aufweist, wobei der Längsträger (9) mittig angeordnet ist.

2. Anhänger nach Anspruch 1, **dadurch gekennzeichnet, dass** von dem Längsträger (9) beidseitig Querträger (10, 11) abstehen, auf denen der Tank (3) aufliegt.

3. Anhänger nach einem der vorhergehenden Ansprüche, **dadurch gekennzeichnet, dass** am Längsträger (9) zumindest ein Achsaggregat (5) mit Reifen (6) befestigt ist.

4. Anhänger nach einem der vorhergehenden Ansprüche, **dadurch gekennzeichnet, dass** im Tank (3) ein an der Unterseite offener Kanal (17) ausgeformt ist, wobei der Längsträger (9) in dem Kanal (17) angeordnet ist.

5. Anhänger nach Anspruch 4, **dadurch gekennzeichnet, dass** im Inneren des Tanks (3) beidseitig des Kanals (17), und somit seitlich des Längsträgers (9), Flüssigkeit aufnehmbar ist.

6. Anhänger nach einem der Ansprüche 4 oder 5, **dadurch gekennzeichnet, dass** an der Vorderseite des Tanks (3) beidseitig des Kanals (17) je eine Tankleitung (15) in den Tank (3) führt, und/oder dass an der Rückseite des Tanks (3) beidseitig des Kanals (17) je eine Rührleitung in den Tank (3) führt.

7. Anhänger nach einem der vorhergehenden Ansprüche, **dadurch gekennzeichnet, dass** der Längsträger (9) rohrförmig ausgestaltet ist.

8. Anhänger nach Anspruch 7, **dadurch gekennzeichnet, dass** im rohrförmigen Längsträger (9) eine Längsleitung (16) für die Flüssigkeit angeordnet ist.

9. Anhänger nach einem der Ansprüche 7 oder 8, **dadurch gekennzeichnet, dass** in dem rohrförmigen Längsträger (9) zumindest eine Pumpe (7) für die Flüssigkeit eingesteckt ist.

10. Anhänger nach Anspruch 9, **dadurch gekennzeichnet, dass** eine Anschlussleitung (14) seitlich durch den Längsträger (9) hindurch zur Pumpe (7) geführt ist.

11. Anhänger nach einem der Ansprüche 9 oder 10, **dadurch gekennzeichnet, dass** der Längsträger (9) im Bereich der Pumpe (7) den größten Querschnitt aufweist.

12. Anhänger nach einem der vorhergehenden Ansprüche, **dadurch gekennzeichnet, dass** die Deichsel (4) integraler Bestandteil des Längsträgers (9) ist.

13. Anhänger nach einem der Ansprüche 1 bis 11, **dadurch gekennzeichnet, dass** die Deichsel (4) am Querträger (10) angreift.
